# EUROPEAN PATENT APPLICATION

(11) **EP 4 178 248 A1**
(43) Date of publication of application: **10.05.2023**
(21) Application number: 21206724.3
(22) Date of filing: 05.11.2021
(51) Int. Cl.: H04W 24/02

(54) **GRID-OF-BEAMS OPTIMIZATION FOR STATIONARY DEVICES**

(71) Applicant: Nokia Solutions and Networks Oy, 02610 Espoo (FI)
(72) Inventor: GÜRSU, Halit Murat, 81371 München (DE); BULAKCI, Ömer, 80997 München (DE); ALLWANG, Christiane, 81541 München (DE); SAMDANIS, Konstantinos, 81541 München (DE)
(74) Representative: TBK

(57) **Abstract**

Method comprising:
monitoring whether a first terminal is stationary;
preparing a report or an output for the first terminal if the first terminal is stationary, wherein the report or the output, respectively, comprises at least one of a performance measurement and a performance indicator for the first terminal based on at least one of
• a number of ping-pong handovers performed by the first terminal between a first cell and another cell,
• for each of one or more beams of the first cell, a result of a measurement performed by the first terminal, wherein the measurement is related to the respective beam, and
• for each of the one or more beams of the first cell, a number of active stationary terminals in the respective beam, wherein the first terminal belongs to the active terminals in the respective beam;

providing the report or the output, respectively, to an analytics producer.

## Description

### Field of the invention

The present disclosure relates to stationary devices, in particular REDCAP devices, and in particular to their energy consumption.

### Abbreviations

- 3GPP: 3^{rd} Generation Partnership Project
- 4G / 5G / 6G: 4^{th} / 5^{th} / 6^{th} Generation
- 5GC: 5^{th} Generation Core network
- 5QI: 5^{th} Generation Quality indicator
- CCE: Control Channel Element
- DL: Downlink
- DRX: Discontinuous Reception
- ES: Energy Savings
- FDD: Frequency Division Duplex
- gNB-CU: gNB Central Unit
- gNB-DU: gNB Distributed Unit
- GNSS: Global Navigation Satellite System
- GoB: Grid of Beams
- HO: Handover
- ID: Identifier
- KPI: Key performance indicator
- MDA: Management data analytics
- MDT: Minimization of Drive Tests
- MnS: Management Service
- MOI: Managed Object Instance
- MRO: Mobility robustness optimization
- NG: Next Generation
- NR: New Radio
- NWDAF: Network Data Analytics Function
- OAM: Operation, Administration and Maintenance

- O-RAN: Open RAN
- PDCCH: Physical Downlink Control Channel
- PHR: Power headroom report
- PLMN: Public Land Mobile Network
- PM: Performance measurement
- QCI: QoS class identifier
- QoS: Quality of Service
- RAN: Radio Access Network
- RCEF: RRC Connection Establishment Failure
- REDCAP: Reduced Capability
- RLF: Radio Link Failure
- RRC: Radio Resource Control
- RRM: Radio Resource Management
- RSRP: Reference Signal Received Power
- RSRQ: Reference Signal Received Quality
- RX: Receive
- SINR: Signal over Interference and Noise Ratio
- S-NSSAI: Single - Network Slice Selection Assistance
- TR: Technical report
- TS: Technical specification
- TX: Transmit
- UE: User equipment
- UL: Uplink

### Background

### Background on RedCap UEs

RedCap UEs may target at least one of several use-cases with specific requirements, such as [3GPP TR 38.875 Clause 4]:
1. Industrial wireless sensors: Reference use cases and requirements are described in 3GPP TR 22.832 and 3GPP TS 22.104: Communication service availability is 99.99% and end-to-end latency less than 100 ms. The reference bit rate is less than 2 Mbps (potentially asymmetric, e.g., UL heavy traffic) for all use cases and the device is stationary. The battery should last at least few years. For safety related sensors, the latency requirement is 5-10 ms (3GPP TR 22.804)
2. Video Surveillance: As described in 3GPP TR 22.804, reference economic video bitrate would be 2-4 Mbps, latency < 500 ms, reliability 99%-99.9%. High-end video, e.g., for farming would require 7.5-25 Mbps. It is noted that traffic pattern is dominated by UL transmissions.
3. Wearables: Reference bitrate for smart wearable application can be 5-50 Mbps in DL and 2-5 Mbps in UL and peak bit rate of the device higher, up to 150 Mbps for downlink and up to 50 Mbps for uplink. Battery of the device should last multiple days (up to 1-2 weeks).

Among the potential features that allow reducing UE complexity/cost, there are:
- Reduced number of UE RX/TX antennas
- UE bandwidth reduction
- Half-duplex FDD
- Relaxed UE processing time
- Relaxed UE processing capability

The UE power saving and battery lifetime enhancement for RedCap UEs is one of the main objectives of the study item [3GPP RP-201677] as identified as a key requirement for several use-cases. Several techniques are therein listed:
- Reduced PDCCH monitoring by smaller numbers of blind decodes and CCE limits [RAN1].
- Extended DRX for RRC Inactive and/or Idle [RAN2]
- RRM relaxation for stationary devices [RAN2]

In the subscription, it is indicated that a UE is a RedCap UE. In addition, a RedCap UE might indicate by radio signaling that it is a RedCap UE.

### Background on RRM Relaxation

Optimizing energy consumption of UEs through reduced measurement frequency can be investigated in two branches. The first branch is control plane, e.g. mobility-related measurements, and the second is user plane-related measurements. RRM relaxation investigates purely mobility-related measurements. RRM relaxation is composed of two components: RRM relaxation trigger, and RRM measurement relaxation. One main RRM relaxation trigger is not-at-cell-edge criterion, i.e. the UE is not at the edge of the cell. Another RRM relaxation trigger is that the UE is stationary. For example, industrial wireless sensors and video surveillance are usually permanently installed, e.g. on a wall, ceiling or pipeline, and are therefore stationary. In general, a UE may be considered as stationary if at least one of the following conditions applies:
- The mobility of the UE is less than a threshold. Here, the mobility may mean the largest distance between UE locations within a given time interval; and
- The subscription of the UE comprises an indication that the UE is a stationary UE.

### Background on Grid of Beams optimization

In conventional mobile networks (from 5G onwards), cells may transmit their radio signals by multiple beams from an antenna array. The beams form a Grid of Beams (GoB). Different amplitudes and phases may be applied to the beams (beamforming) to direct the radio signal into a certain direction (towards a UE). The Grid of Beams (GoB) of each cell is substantially static. Once the base station is powered on, the cell specific GoB will be loaded into the base stations. A change of GoB may typically require rebooting the base station. However, it can be envisioned that adaptive beamforming will be applied, in which GoBs can be dynamically changed depending on the traffic demand in the cell in order to provide better quality of service. The operator may employ different GoBs at the same base station at different times, e.g., a particular GoB in the morning that fits the morning traffic demand in that area, and another GoB in the afternoon that fits the afternoon traffic demand in that area, and a third GoB at weekends that fits the typical weekend traffic demand.

GoB optimization is also discussed in O-RAN Alliance standardisation. It is captured in the O-RAN Use Case Analysis Report as well as in the Use Cases Detailed Specification as Use Case #6 [O-RAN-WG1.Use Cases Analysis Report v05.00; O-RAN.WG1.Use-Cases-Detailed-Specification-v05.00].

### Grid of Beams optimization

As discussed in ongoing O-RAN Work Item on Massive MIMO Beam Forming Optimization [NOK-2021.06.17-MVP-C-Draft-WID-mMIMO-BF-Opt-Pre-Normative-Phase-v7.docx, DRAFT O-RAN.WG1.Use-Cases-mMIMO-TR-v00.02.docx], GoB optimization may be performed to optimize the coverage in monthly/weekly/daily/couple of hours fashion using ML algorithms.
- For this optimization, RAN Node may report PMs (Performance Measurements)/KPIs (Key Performance Indicators) such as UE throughput, number of active UEs, etc. (3GPP TS 28.552 / 3GPP TS 28.554) in the management plane.
- These PMs/KPIs mostly present a distribution or aggregation per cell and in some cases per beam.

### Connected mode measurements

Currently, UEs can be configured with a trace and/or MDT job (3GPP TS 37.320, 3GPP TS 28.622) to report its GNSS position. The GNSS position can be used to optimize beam coverage if details of beam coverage are known by the OAM.

### Management Data Analytics (MDA)

A current study on MDA (3GPP TS 28.809) documents a use case and solution related to inter-gNB beam pair optimization by maintaining statics related to beam pair performance.

### Summary

It is an object of the present invention to improve the prior art.

According to a first aspect of the invention, there is provided an apparatus comprising:
one or more processors, and memory storing instructions that, when executed by the one or more processors, cause the apparatus to perform:
monitoring whether a first terminal is stationary;
preparing a report or an output for the first terminal if the first terminal is stationary, wherein the report or the output, respectively, comprises at least one of a performance measurement and a performance indicator for the first terminal based on at least one of
   - a number of ping-pong handovers performed by the first terminal between a first cell and another cell,
   - for each of one or more beams of the first cell, a result of a measurement performed by the first terminal, wherein the measurement is related to the respective beam, and
   - for each of the one or more beams of the first cell, a number of active stationary terminals in the respective beam, wherein the first terminal belongs to the active terminals in the respective beam;
providing the report or the output, respectively, to an analytics producer.

For each of the one or more beams, the result of the measurement related to the respective beam may comprise at least one of an energy consumption of the terminal for the respective beam and a throughput of the terminal via the respective beam.

The instructions, when executed by the one or more processors, may further cause the apparatus to perform:
configuring the first terminal to perform the measurement and to report the result of the measurement.

The instructions, when executed by the one or more processors, may further cause the apparatus to perform for each of the one or more beams:
measuring at least one of a number of active stationary terminals in the respective beam and a maximum number of active stationary terminals in the respective beam.

The instructions, when executed by the one or more processors, may further cause the apparatus to perform for each of the one or more beams:
configuring the terminal to measure at least one of
- an average downlink throughput per beam;
- an average uplink throughput per beam;
- an average supplementary uplink throughput per beam;
- an energy consumption per beam.

According to a second aspect of the invention, there is provided an apparatus comprising:
one or more processors, and memory storing instructions that, when executed by the one or more processors, cause the apparatus to perform:
receiving a report or an output from a first cell, wherein the report or output, respectively, comprises an indication that a first terminal is stationary and at least one of a performance measurement and a performance indicator related to the first terminal;
and the instructions, when executed by the one or more processors, further cause the apparatus to perform at least one of:
   calculating a grid of beams for the first cell taking into account the at least one of the performance measurement and the performance indicator and providing the grid of beams to the first cell; and
   calculating a beam management policy for the first terminal and the first cell taking into account the at least one of the performance measurement and the performance indicator and providing the beam management policy to the first cell.

The at least one of the performance measurement and the performance indicator may be based on at least one of
- a number of ping-pong handovers performed by the first terminal between the first cell and another cell,
- for each of one or more beams of the first cell, a result of a measurement performed by the first terminal, wherein the measurement is related to the respective beam, and
- for each of the one or more beams of the first cell, a number of active terminals in the respective beam, wherein the first terminal belongs to the active terminals in the respective beam.

If the instructions, when executed by the one or more processors, cause the apparatus to perform the calculating the grid of beams, the grid of beams may be calculated such that at least one of the following adaptations is performed:
- a change of a beam directive gain of at least one of the beams of the grid of beams;
- a change of the number of beams in the grid of beams; and
- a change of an orientation of at least one of the beams of the grid of beams.

If the instructions, when executed by the one or more processors, cause the apparatus to perform the calculating the beam management policy, the beam management policy may be calculated such that at least one of the following adaptations is performed:
- a change in a threshold by which a RSRP of one beam must be higher than a RSRP of another beam for making the UE change from the one beam to the other beam;
- a minimum time during which the RSRP of the other beam must be higher than the RSRP of the one beam for making the UE change from the one beam to the other beam.

The instructions, when executed by the one or more processors, may further cause the apparatus to perform the calculating of the grid of beams or the calculating of the beam management policy, respectively, such that energy consumption of the first terminal is reduced.

According to a third aspect of the invention, there is provided an apparatus comprising:
one or more processors, and memory storing instructions that, when executed by the one or more processors, cause the apparatus to perform:
monitoring if a terminal is configured to perform a measurement per beam;
instructing the terminal to perform the measurement per beam if the terminal is configured to perform the measurement per beam, wherein
   the measurement comprises at least one of
   - an average downlink throughput per beam;
   - an average uplink throughput per beam;
   - an average supplementary uplink throughput per beam;
   - an energy consumption per beam.

According to a fourth aspect of the invention, there is provided a method comprising:
monitoring whether a first terminal is stationary;
preparing a report or an output for the first terminal if the first terminal is stationary, wherein the report or the output, respectively, comprises at least one of a performance measurement and a performance indicator for the first terminal based on at least one of
   - a number of ping-pong handovers performed by the first terminal between a first cell and another cell,
   - for each of one or more beams of the first cell, a result of a measurement performed by the first terminal, wherein the measurement is related to the respective beam, and
   - for each of the one or more beams of the first cell, a number of active stationary terminals in the respective beam, wherein the first terminal belongs to the active terminals in the respective beam;
providing the report or the output, respectively, to an analytics producer.

For each of the one or more beams, the result of the measurement related to the respective beam may comprise at least one of an energy consumption of the terminal for the respective beam and a throughput of the terminal via the respective beam.

The method may further comprise:
configuring the first terminal to perform the measurement and to report the result of the measurement.

The method may further comprise for each of the one or more beams:
measuring at least one of a number of active stationary terminals in the respective beam and a maximum number of active stationary terminals in the respective beam.

The method may further comprise for each of the one or more beams:
configuring the terminal to measure at least one of
- an average downlink throughput per beam;
- an average uplink throughput per beam;
- an average supplementary uplink throughput per beam;
- an energy consumption per beam.

According to a fifth aspect of the invention, there is provided a method comprising:
receiving a report or an output from a first cell, wherein the report or output, respectively, comprises an indication that a first terminal is stationary and at least one of a performance measurement and a performance indicator related to the first terminal;
and at least one of:
   calculating a grid of beams for the first cell taking into account the at least one of the performance measurement and the performance indicator and providing the grid of beams to the first cell; and
   calculating a beam management policy for the first terminal and the first cell taking into account the at least one of the performance measurement and the performance indicator and providing the beam management policy to the first cell.

The at least one of the performance measurement and the performance indicator may be based on at least one of
- a number of ping-pong handovers performed by the first terminal between the first cell and another cell,
- for each of one or more beams of the first cell, a result of a measurement performed by the first terminal, wherein the measurement is related to the respective beam, and
- for each of the one or more beams of the first cell, a number of active terminals in the respective beam, wherein the first terminal belongs to the active terminals in the respective beam.

If the method comprises the calculating the grid of beams, the grid of beams may be calculated such that at least one of the following adaptations is performed:
- a change of a beam directive gain of at least one of the beams of the grid of beams;
- a change of the number of beams in the grid of beams; and
- a change of an orientation of at least one of the beams of the grid of beams.

If the method comprises the calculating the beam management policy, the beam management policy may be calculated such that at least one of the following adaptations is performed:
- a change in a threshold by which a RSRP of one beam must be higher than a RSRP of another beam for making the UE change from the one beam to the other beam;
- a minimum time during which the RSRP of the other beam must be higher than the RSRP of the one beam for making the UE change from the one beam to the other beam.

The calculating of the grid of beams or the calculating of the beam management policy, respectively, may be performed such that energy consumption of the first terminal is reduced.

According to a sixth aspect of the invention, there is provided a method comprising:
monitoring if a terminal is configured to perform a measurement per beam;
instructing the terminal to perform the measurement per beam if the terminal is configured to perform the measurement per beam, wherein the measurement comprises at least one of
   - an average downlink throughput per beam;
   - an average uplink throughput per beam;
   - an average supplementary uplink throughput per beam;
   - an energy consumption per beam.

Each of the methods of the fourth to sixth aspects may be a method of GoB optimization.

According to a seventh aspect of the invention, there is provided a computer program product comprising a set of instructions which, when executed on an apparatus, is configured to cause the apparatus to carry out the method according to any of the fourth to sixth aspects. The computer program product may be embodied as a computer-readable medium or directly loadable into a computer.

According to some embodiments of the invention, at least one of the following advantages may be achieved:
- energy consumption of REDCAP UEs (or, more generally: stationary UEs) may be reduced;
- easy from specification point of view.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows RedCap UEs at the overlap of two cells (at the edge of each of the cells);
Fig. 2 shows a message sequence chart according to some example embodiments of the invention;
Fig. 3 shows an apparatus according to an example embodiment of the invention;
Fig. 4 shows a method according to an example embodiment of the invention;
Fig. 5 shows an apparatus according to an example embodiment of the invention;
Fig. 6 shows a method according to an example embodiment of the invention;
Fig. 7 shows an apparatus according to an example embodiment of the invention;
Fig. 8 shows a method according to an example embodiment of the invention; and
Fig. 9 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

It is intended that RedCap UEs save energy to enable multiple years of battery lifetime. RRM relaxation can be configured as one way to achieve this goal. RRM relaxation is enabled if UEs are detected to be not on cell edge.

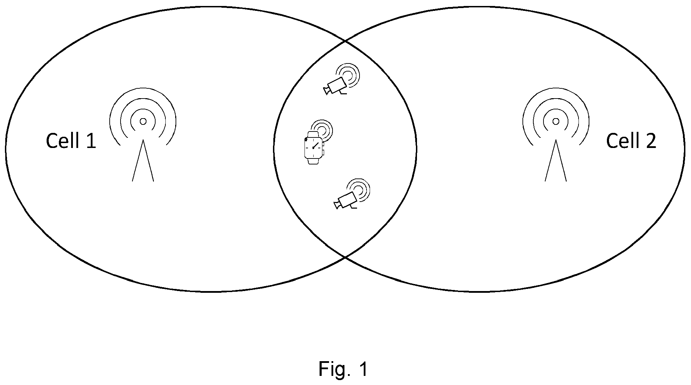

Even though some RedCap UEs are stationary, some of them will be placed on the cell edge between two separate gNBs or two cells within the same gNB, as shown in Fig. 1. As the cell boundaries may vary over time, e.g. due to the effects of mobility robustness optimization (MRO) or changing weather conditions, also such stationary RedCap UEs may need to change the cell they are connected to.

### Issue 1: The cell-edge RedCap UEs will not be able to do RRM relaxation even though they are stationary UEs. These UEs will have to go through normal mobility procedure and their battery lifetime will suffer.

Some stationary RedCap UEs will be placed on the border of two beams. These UEs will not necessarily need inter-cell mobility but will be subject to extra signalling through extra beam management. Hence there is a need for a means to identify these stationary RedCap UEs.

### Issue 2: The beam-edge Stationary RedCap UEs,

### Issue 2a) will experience more often active beam change, beam failure detection or beam failure recovery. These UEs will experience a faster battery drain compared to other UEs.

### Issue 2b) will experience more re-transmissions or transmissions with higher modulation and coding rate resulting in faster battery drain compared to other UEs.

Currently, beam management is not aware of UEs' battery consumptions requirements. Beam management is currently conducted agnostically to the UE battery life-time requirements.

### Issue 3: The beam management cannot react to UE battery life-time requirements.

The prior art mentioned above does not solve any of these issues:
According to some prior art, Grid of Beam Optimization is not UE or UE group specific (i.e. considering a UE ID). Thus, such GoB optimization is not aware that a specific UE served by the cell/beam is a stationary UE, e.g., RedCap UE and is not aware that their energy consumption shall be reduced.

The connected mode measurements based on the GNSS position may require extra hardware that may not be available for the RedCap UEs. In addition, if the UEs are indoors, precision of GNSS position is not clear.

Some example embodiments of the invention provide a method for reducing battery consumption of stationary UEs (in particular of stationary RedCap UEs) with the use of analytics. The analytics (e.g. by MDA MnS producer) may instruct the cell (represented by its gNB) to update its beam management policy (at least for the RedCap UE under consideration) and/or to adapt its Grid of Beams.

According to some example embodiments, the serving cell collects, for a ***stationary*** ***UE** (in particular: a stationary RedCap UE),* metrics such as, ping-pong HO for the UE, throughput per beam (not specified in 3GPP yet), energy consumption per beam (not specified in 3GPP yet), and number of active stationary UEs per beam (not specified in 3GPP yet). Advanced performance measurements (PMs/KPIs) can be calculated from these metrics. Based on the performance measurements, the serving cell compiles a report for the stationary UE (e.g., "stationary UE report"). This stationary UE report is sent to MDA MnS producer. MDA MnS producer uses one or more of these reports to calculate one or more indicators of the energy consumption of the stationary UE.

In some example embodiments, the MDA MnS producer takes the PMs/KPIs of the stationary UE into account in the analytics based optimization algorithm for Grid of Beams in order to reduce stationary UE battery drain.

In some example embodiments, MDA MnS producer uses the PMs/KPIs of the stationary UE to generate a beam selection policy to be applied by the cell for the stationary UE. This policy aims to reduce the battery drain of the stationary UE. The beam selection policy is sent to NG-RAN node and is further used for beam management of the stationary UE.

In some example embodiments, the obtained algorithm for the GoB and/or the obtained beam selection policy may be applied to plural stationary UEs and/or to plural cells.

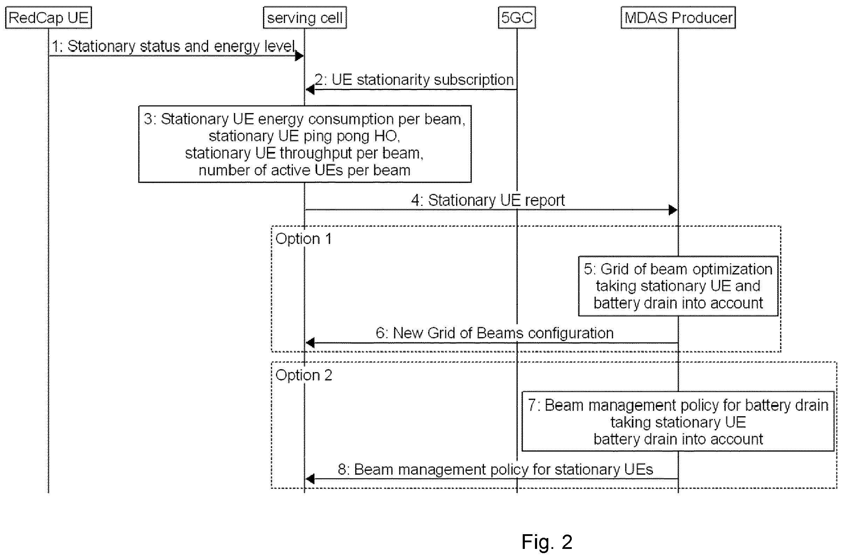

Fig. 2 shows a message sequence chart according to some example embodiments of the invention. The actions are as follows:
1) The UE (e.g. RedCap UE) is pre-configured with measurements to detect if it is stationary such that the RRM Relaxation criterion is fulfilled. A UE is pre-configured to report if it is stationary. RedCap UE reports its stationary status (whether or not it is stationary) and its battery level to the serving cell.
2) Similarly, a stationary indication related to a UE may be included in its subscription and 5GC may provide this information to the serving cell.

In some example embodiments, only one of actions 1 and 2 is performed. In some example embodiments, both actions 1 and 2 are performed. Then, dependent on implementation, the cell considers the UE as stationary if at least one of the actions implies that the UE is stationary or if both actions imply that the UE is stationary. Hereinafter, it is assumed that the cell considers the UE being stationary.
3) Serving cell being aware of the stationary status of the UE may create a separate log for the stationary UE. This log may include at least one of the following pieces of information:
   a. Energy consumption per beam,
   b. Ping-pong HO,
   c. Throughput per beam,
   d. Number of active UEs per beam.
4) The serving cell may compile a report considering only stationary UEs (e.g., "stationary UE report"). This report could include e.g. number of ping-pong HO of all stationary UEs in that cell or Throughput per beam of all stationary UEs in that cell. The serving cell sends the report to the corresponding MDA MnS producer.

Then, in some example embodiments, only actions 5 and 6 of option 1 but not actions 7 and 8 of option 2 are performed. In some example embodiments, only actions 7 and 8 of option 2 but not actions 5 and 6 of option 1 are performed. In some example embodiments, actions 5 to 8 of both options 1 and 2 are performed. The actions of option 1 may be performed fully or partly in parallel to the actions of option 2. The actions of option 1 may be performed prior to the actions of option 2, or the actions of option 2 may be performed prior to the actions of option 1.
5) In option 1, MDA MnS producer uses information contained in the stationary UE report to adjust the Grid of Beams.
   a. Different Grid of Beams configurations may result in at least one of
      i. UE decreasing ping-pong HOs
      ii. UE decreasing beam changes
      iii. UE decreasing beam failures and recovery attempts
   For example, MDA MNS producer may instruct the cell to replace two sharp beams by one broad beam. Another example is to increase the power of a certain beam if a lot of ping pongs are observed. More in general, MDA MNS producer may instruct the cell to perform at least one of the following adaptations:
   i. change the beam directive gain (move from broad beam to narrow beam or vice versa);
   ii. change the number of beams (e.g. deploying 4 beams instead of 8 beams in a cell);
   iii. changing the orientation of a beam (e.g. rotate a coverage by a certain beam by n° such that a UE, which was previously in the overlap between this beam and another beam is not in the overlap anymore).
   As a consequence, UE battery consumption is reduced.
6) MDA MnS producer indicates to the gNB that the adjusted Grid of Beams configuration shall be deployed.
7) In option 2, MDA MnS producer uses the information contained in the stationary UE report to create a beam management policy per cell and UE.

For example, the beam management policy may be adapted such that a specific stationary UE shall stay in a certain beam although the RSRP of another beam is higher. Another example is that all stationary UEs of a certain beam should not be handed over to a certain neighbouring beam or shall only be handed over if the RSRP of the other beam is higher than the RSRP of the current beam plus a certain offset value. Another policy could be that the stationary UE is only handed over if the RSRP of the other beam is higher for at least a certain amount of time. As further options, UE may be configured with a lower beam failure indication threshold.

Still further examples are as follows:
- UE may be configured with a minimum number of beams;
- UE may be configured with broader beams instead of narrow beams.

While conventionally beam management policy aims to maximize UE throughput and/or mobility robustness, according to some example embodiments of the invention, reduced energy consumption is taken into account, either as the only target or jointly with the conventional targets.
8) MDA MnS producer sends the created beam management policy for the stationary UE to the serving cell. The cell, instructed by MDA MnS producer, uses the beam management policy to select active beams for stationary RedCap UEs.

Hereinafter, some of the measurements which the cell may configure in the UE and the measurement results of which may be used to generate the PM/KPI(s) of the stationary UE report (actions 3 and 4 of Fig. 2) are described at greater detail. In current version of 3GPP TS 28.552, these measurements are specified per cell. However, according to some example embodiments, beam granularity is applied.

Furthermore, as optional subcounters, QoS level (mapped 5QI or QCI in NR option 3), S-NSSAI and PLMN ID are supported according to 3GPP TS 28.552. For GoB optimization or beam management optimization for reducing power consumption of a RedCap UE, the optional subcounters "stationary UE" and "non-stationary UE" may be introduced. According to some example embodiments herein, the optional subcounters may include slice group IDs.

This means in detail e.g.:
- Add measurement "Average DL/UL UE throughput per beam" in addition to "Average DL/UL UE throughput in gNB" (see 3GPP TS 28.552, clauses 5.1.1.3.1 and 5.1.1.3.3)
- Add measurement "Number of Active stationary UEs in the DL/UL per beam" in addition to "Number of Active UEs in the DL/UL per cell" (see 3GPP TS 28.552, clauses 5.1.1.23.1 and 5.1.1.23.3)
- Add measurement "Max number of Active UEs in the DL/UL per beam" in addition to "Max number of Active UEs in the DL/UL per cell" (see 3GPP TS 28.552, clauses 5.1.1.23.2 and 5.1.1.23.4)
- Add measurement "Type 1 power headroom distribution per beam" in addition to "Type 1 power headroom distribution" per cell (see 3GPP TS 28.552, clause 5.1.1.26.1)

In the above examples, supplementary UL (SUL) may also be considered according to some embodiments herein.

If the gNB is split into gNB-CU and gNB-DU, the handover decision is performed at gNB-CU. In contrast to gNB-DU, the gNB-CU is not aware to which beam a UE is assigned. Therefore, the following measurements may be enhanced only by subcounters "stationary UE" and "non-stationary UE":
- "Mean/Max number of RRC Connections" (see 3GPP TS 28.552, clauses 5.1.1.4.1 and 5.1.1.4.2).
- "Mean/Max number of stored inactive RRC Connections" (see 3GPP TS 28.552, clauses 5.1.1.4.3 and 5.1.1.4.4)
- "Handover failures related to MRO for intra/inter-system mobility" (see 3GPP TS 28.552, clauses 5.1.1.25.1 and 5.1.1.25.2)
- "Unnecessary handovers for inter-system mobility" (see 3GPP TS 28.552, clause 5.1.1.25.3)
- "Handover ping-pong for inter-system mobility" (see 3GPP TS 28.552, clause 5.1.1.25.4)
- Measurements related to mobility management (see 3GPP TS 28.552, clause 5.1.1.6), e.g. number of successful/failed handover executions

NWDAF analytics can also provide an insight related to abnormal behaviour (e.g. a lot of ping pong handover or fast energy power consumption) as per 3GPP TS 23.228.

MDT measurements may also enhance the input information related to radio conditions:
- RSRPs, RSRQs, RLF, RCEF, SINR of a cell and UE location information as per 3GPP TS 32.422 and 3GPP TS 37.320
- Similarly, MDT measurements may compromise any of the measurements in step 3.

In actions 6 and 8, the MDA MnS producer provides the result of its calculation to the cell (gNB). The result of the calculation may be contained in an MDA report. The MDA report may contain the attributes of Table 1:

**Table 1: Analytics report for energy saving**

| **Analytics Report** | **Information** | **Description** |
|---|---|---|
| **for Energy Saving related to RedCap UEs** | ES RedCap Identifier | The RedCap ID or name |
| | Type of ES incident | Describes the type of ES incident faced by the RedCap UE, e.g., ping-pong HOs, beam changes, beam failures and recovery attempts, etc. |
| | Location | The geographical area or the cells where the ES RedCap is applied |
| | Start/stop Time | The start/stop time of ES RedCap incident |
| | Affected objects | The affected objects (e.g., the MOIs of cells or subnetworks or network slices affected). |
| | Object relations | the (list of) relationship(s) between the objects, e.g., neighbor cells or base stations. |
| | RedCap Policy | Recommended beam management policy to select active beams for stationary RedCap UEs |

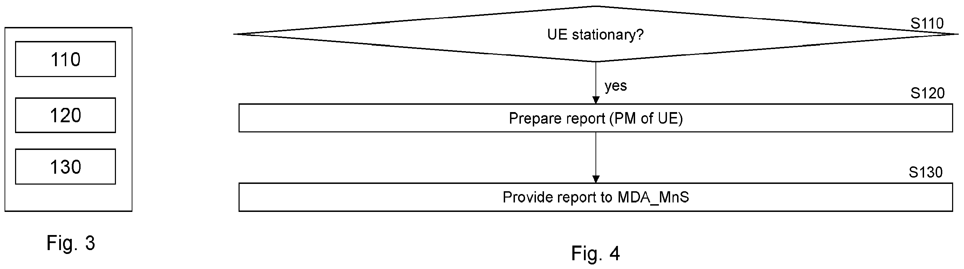

Fig. 3 shows an apparatus according to an example embodiment of the invention. The apparatus may be a cell (represented by a gNB) or an element thereof. Fig. 4 shows a method according to an example embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises means for monitoring 110, means for preparing 120, and means for providing 130. The means for monitoring 110, means for preparing 120, and means for providing 130 may be a monitoring means, preparing means, and providing means, respectively. The means for monitoring 110, means for preparing 120, and means for providing 130 may be a monitor, preparer, and provider, respectively. The means for monitoring 110, means for preparing 120, and means for providing 130 may be a monitoring processor, preparing processor, and providing processor, respectively.

The means for monitoring 110 monitors whether a first terminal is stationary (S110). For example, the means for monitoring 110 may determine if the first terminal is stationary based on the mobility of the first terminal, and/or the means for monitoring may obtain the stationary status from the subscription information of the first terminal.

If the first terminal is stationary (S110 = yes), the means for preparing 120 prepares a report for the first terminal (S120). The report comprises a performance measurement for the first terminal. The performance measurement is based on at least one of
- a number of ping-pong handovers performed by the first terminal between a first cell and another cell,
- for each of one or more beams of the first cell, a result of a measurement performed by the first terminal, wherein the measurement is related to the respective beam, and
- for each of the one or more beams of the first cell, a number of active terminals in the respective beam, wherein the first terminal belongs to the active terminals in the respective beam.

The means for providing 130 provides the prepared report to an analytics producer (S130). The term "report" may also include an output of a http method (push or pull) with the analytics producer.

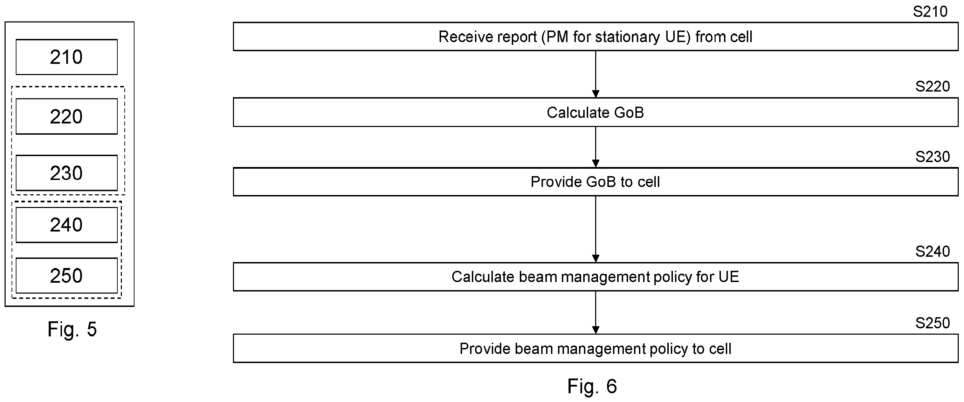

Fig. 5 shows an apparatus according to an example embodiment of the invention. The apparatus may be a service producer, such as a MDA MnS producer, or an element thereof. Fig. 6 shows a method according to an example embodiment of the invention. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for receiving 210 and at least one of first means for calculating 220 with first means for providing 230 and second means for calculating 240 with second means for providing 250. Fig. 5 shows a case where the apparatus comprises both first means for calculating 220 with first means for providing 230 and second means for calculating 240 with second means for providing 250. The means for receiving 210, first means for calculating 220, first means for providing 230, second means for calculating 240, and second means for providing 250 may be a receiving means, first calculating means, first providing means, second calculating means, and second providing means, respectively. The means for receiving 210, first means for calculating 220, and first means for providing 230, second means for calculating 240, and second means for providing 250 may be a receiver, first calculator, first provider, second calculator, and second provider, respectively. The means for receiving 210, first means for calculating 220, first means for providing 230, second means for calculating 240, and second means for providing 250 may be a receiving processor, first calculating processor, first providing processor, second calculating processor, and second providing processor, respectively.

The means for receiving 210 receives a report from a first cell (S210). The report comprises an indication that a first terminal is stationary and at least one of a performance measurement and a performance indicator related to the first terminal. The term "report" may also include an output of a http method (push or pull) with the analytics producer.

If the apparatus comprises the first means for calculating 220 and the first means for providing 230, the first means for calculating 220 calculates a grid of beams for the first cell taking into account the at least one of the performance measurement and the performance indicator (S220). For example, the grid of beams may be calculated such that energy consumption of the first terminal is reduced compared to an energy consumption at the time when the measurement data for the report were taken. The first means for providing 230 provides the calculated grid of beams to the first cell (S230).

If the apparatus comprises the second means for calculating 240 and the second means for providing 250, the second means for calculating 240 calculates a beam management policy for the first terminal and the first cell taking into account the at least one of the performance measurement and the performance indicator (S240). For example, the beam management policy may be calculated such that energy consumption of the first terminal is reduced compared to an energy consumption at the time when the measurement data for the report were taken. The second means for providing 250 provides the calculated beam management policy to the first cell (S250).

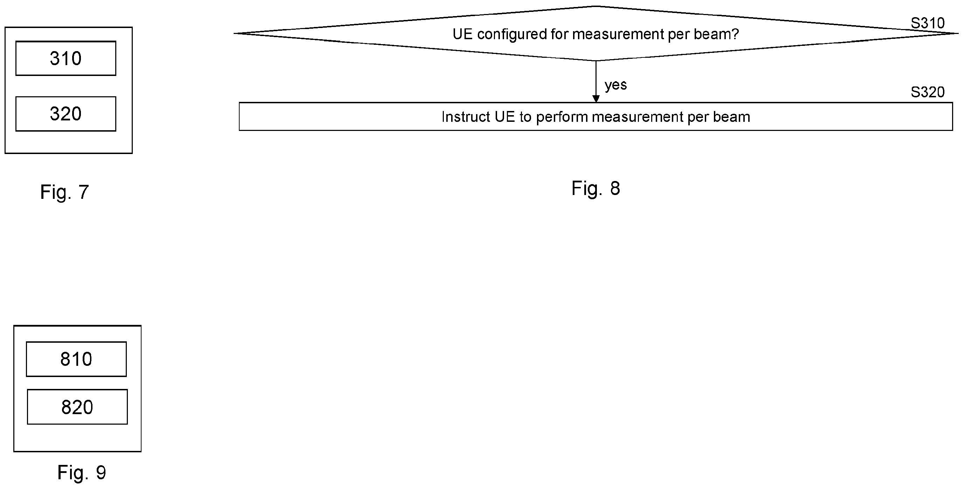

Fig. 7 shows an apparatus according to an example embodiment of the invention. The apparatus may be a terminal (such as a UE or an MTC device) or an element thereof. Fig. 8 shows a method according to an example embodiment of the invention. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises means for monitoring 310 and means for instructing 320. The means for monitoring 310 and means for instructing 320 may be a monitoring means and instructing means, respectively. The means for monitoring 310 and means for instructing 320 may be a monitor and instructor, respectively. The means for monitoring 310 and means for instructing 320 may be a monitoring processor and instructing processor, respectively.

The means for monitoring 310 monitors if a terminal is configured to perform a measurement per beam (S310). If the terminal is configured to perform the measurement per beam (S310), the means for instructing 320 instructs the terminal to perform the measurement per beam (S320). The measurement comprises at least one of
- an average downlink throughput per beam;
- an average uplink throughput per beam;
- an average supplementary uplink throughput per beam;
- an energy consumption per beam.

Fig. 9 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 4, 6, and 8 and related description.

Some example embodiments are explained with respect to a 5G network. However, the invention is not limited to 5G. It may be used in other radio networks, too, e.g. in previous of forthcoming generations of 3GPP networks such as 4G, 6G, or 7G, etc. It may be used in non-3GPP networks providing beams.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, an analytics function (such as a MDA MnS producer) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a cell (represented by a base station such as a gNB or eNB) or a component thereof, an apparatus embodying the same, a method for controlling and/or operating the same, and computer program(s) controlling and/or operating the same as well as mediums carrying such computer program(s) and forming computer program product(s).

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

## Claims

1. Apparatus comprising:
one or more processors, and
memory storing instructions that, when executed by the one or more processors, cause the apparatus to perform:
monitoring whether a first terminal is stationary;
preparing a report or an output for the first terminal if the first terminal is stationary, wherein the report or the output, respectively, comprises at least one of a performance measurement and a performance indicator for the first terminal based on at least one of
• a number of ping-pong handovers performed by the first terminal between a first cell and another cell,
• for each of one or more beams of the first cell, a result of a measurement performed by the first terminal, wherein the measurement is related to the respective beam, and
• for each of the one or more beams of the first cell, a number of active stationary terminals in the respective beam, wherein the first terminal belongs to the active terminals in the respective beam;
providing the report or the output, respectively, to an analytics producer.

2. The apparatus according to claim 1, wherein, for each of the one or more beams, the result of the measurement related to the respective beam comprises at least one of an energy consumption of the terminal for the respective beam and a throughput of the terminal via the respective beam.

3. The apparatus according to any of claims 1 and 2, wherein the instructions, when executed by the one or more processors, further cause the apparatus to perform:
configuring the first terminal to perform the measurement and to report the result of the measurement.

4. The apparatus according to any of claims 1 to 3, wherein the instructions, when executed by the one or more processors, further cause the apparatus to perform for each of the one or more beams:
measuring at least one of a number of active stationary terminals in the respective beam and a maximum number of active stationary terminals in the respective beam.

5. The apparatus according to any of claims 1 to 4, wherein the instructions, when executed by the one or more processors, further cause the apparatus to perform for each of the one or more beams:
configuring the terminal to measure at least one of
• an average downlink throughput per beam;
• an average uplink throughput per beam;
• an average supplementary uplink throughput per beam;
• an energy consumption per beam.

6. Apparatus comprising:
one or more processors, and
memory storing instructions that, when executed by the one or more processors, cause the apparatus to perform:
receiving a report or an output from a first cell, wherein the report or output, respectively, comprises an indication that a first terminal is stationary and at least one of a performance measurement and a performance indicator related to the first terminal;
and the instructions, when executed by the one or more processors, further cause the apparatus to perform at least one of:
calculating a grid of beams for the first cell taking into account the at least one of the performance measurement and the performance indicator and providing the grid of beams to the first cell; and
calculating a beam management policy for the first terminal and the first cell taking into account the at least one of the performance measurement and the performance indicator and providing the beam management policy to the first cell.

7. The apparatus according to claim 6, wherein the at least one of the performance measurement and the performance indicator is based on at least one of
• a number of ping-pong handovers performed by the first terminal between the first cell and another cell,
• for each of one or more beams of the first cell, a result of a measurement performed by the first terminal, wherein the measurement is related to the respective beam, and
• for each of the one or more beams of the first cell, a number of active terminals in the respective beam, wherein the first terminal belongs to the active terminals in the respective beam.

8. The apparatus according to any of claims 6 and 7, wherein, if the instructions, when executed by the one or more processors, cause the apparatus to perform the calculating the grid of beams, the grid of beams is calculated such that at least one of the following adaptations is performed:
• a change of a beam directive gain of at least one of the beams of the grid of beams;
• a change of the number of beams in the grid of beams; and
• a change of an orientation of at least one of the beams of the grid of beams.

9. The apparatus according to any of claims 6 to 8, wherein, if the instructions, when executed by the one or more processors, cause the apparatus to perform the calculating the beam management policy, the beam management policy is calculated such that at least one of the following adaptations is performed:
• a change in a threshold by which a RSRP of one beam must be higher than a RSRP of another beam for making the UE change from the one beam to the other beam;
• a minimum time during which the RSRP of the other beam must be higher than the RSRP of the one beam for making the UE change from the one beam to the other beam.

10. The apparatus according to any of claims 6 to 9, wherein the instructions, when executed by the one or more processors, further cause the apparatus to perform the calculating of the grid of beams or the calculating of the beam management policy, respectively, such that energy consumption of the first terminal is reduced.

11. Apparatus comprising:
one or more processors, and
memory storing instructions that, when executed by the one or more processors, cause the apparatus to perform:
monitoring if a terminal is configured to perform a measurement per beam;
instructing the terminal to perform the measurement per beam if the terminal is configured to perform the measurement per beam, wherein
the measurement comprises at least one of
• an average downlink throughput per beam;
• an average uplink throughput per beam;
• an average supplementary uplink throughput per beam;
• an energy consumption per beam.

12. Method comprising:
monitoring whether a first terminal is stationary;
preparing a report or an output for the first terminal if the first terminal is stationary, wherein the report or the output, respectively, comprises at least one of a performance measurement and a performance indicator for the first terminal based on at least one of
• a number of ping-pong handovers performed by the first terminal between a first cell and another cell,
• for each of one or more beams of the first cell, a result of a measurement performed by the first terminal, wherein the measurement is related to the respective beam, and
• for each of the one or more beams of the first cell, a number of active stationary terminals in the respective beam, wherein the first terminal belongs to the active terminals in the respective beam;
providing the report or the output, respectively, to an analytics producer.

13. Method comprising:
receiving a report or an output from a first cell, wherein the report or output, respectively, comprises an indication that a first terminal is stationary and at least one of a performance measurement and a performance indicator related to the first terminal;
and at least one of:
calculating a grid of beams for the first cell taking into account the at least one of the performance measurement and the performance indicator and providing the grid of beams to the first cell; and
calculating a beam management policy for the first terminal and the first cell taking into account the at least one of the performance measurement and the performance indicator and providing the beam management policy to the first cell.

14. Method comprising:
monitoring if a terminal is configured to perform a measurement per beam;
instructing the terminal to perform the measurement per beam if the terminal is configured to perform the measurement per beam, wherein
the measurement comprises at least one of
• an average downlink throughput per beam;
• an average uplink throughput per beam;
• an average supplementary uplink throughput per beam;
• an energy consumption per beam.

15. A computer program product comprising a set of instructions which, when executed on an apparatus, is configured to cause the apparatus to carry out the method according to any of claims 12 to 14
